# EUROPÄISCHE PATENTSCHRIFT

(11) **EP 3 562 619 B1**
(45) Veröffentlichungstag und Bekanntmachung des Hinweises auf die Patenterteilung: **17.07.2024**
(21) Anmeldenummer: 17825530.3
(22) Anmeldetag: 21.12.2017
(51) Int. Cl.: B23Q 15/12, B23Q 17/09, G05B 19/404, B24B 49/00

(54) **WERKZEUGMASCHINE, INSBESONDERE SCHLEIFMASCHINE, SOWIE VERFAHREN ZUR ERMITTLUNG EINES IST-ZUSTANDES EINER WERKZEUGMASCHINE**
MACHINE TOOL, IN PARTICULAR GRINDING MACHINE, AND METHOD FOR DETERMINING AN ACTUAL STATE OF A MACHINE TOOL
MACHINE-OUTIL, NOTAMMENT RECTIFIEUSE, ET PROCÉDÉ DE DÉTERMINATION D'UN ÉTAT RÉEL D'UNE MACHINE-OUTIL

(30) Priorität: 28.12.2016 DE 102016125803
(43) Veröffentlichungstag der Anmeldung: 06.11.2019
(73) Patentinhaber: Fritz Studer AG, 3612 Steffisburg (CH)
(72) Erfinder: FRUTIGER, Bernhard, 3652 Hilterfingen (CH)
(74) Vertreter: Witte, Weller & Partner Patentanwälte mbB
(86) Internationale Anmeldenummer: PCT/EP2017/084210
(87) Internationale Veröffentlichungsnummer: WO 2018/122119

(56) Entgegenhaltungen:
- EP-A2- 2 587 230
- WO-A1-97/38292
- DE-U1- 202015 001 082

## Beschreibung

Die vorliegende Offenbarung betrifft eine Werkzeugmaschine, insbesondere eine Schleifmaschine, die Folgendes aufweist: eine Messeinrichtung, die an der Werkzeugmaschine aufgenommen ist, wobei die Messeinrichtung zumindest einen Körperschallsensor aufweist, und eine Steuereinrichtung, die mit der Messeinrichtung und einer Werkzeugeinheit koppelbar ist, wobei die Steuereinrichtung dazu ausgebildet ist, von der Werkzeugmaschine ausgelöste Körperschallsignale mittels der zumindest einen Messeinrichtung zu erfassen und einen Ist-Zustand der Werkzeugmaschine zu ermitteln.

Aus der EP 2 587 230 A2, die die Basis für die unabhängigen Ansprüche bildet, ist ein Verfahren zur Schwingungsanalyse bekannt, bei dem während des Bearbeitens eines Werkstückes durch Zerspanen, Schweißen, Umformen, Fügen und/oder Trennen entstehende Schwingungen erfasst und ausgewertet werden, wobei ein Schwingungsspektrum zu verschiedenen Zeiten oder (quasi-) kontinuierlich erfasst und einer mehrdimensionalen Auswertung unterworfen wird, und wobei eine Umhüllende des Schwingungsspektrums gebildet und mit einer Vergleichsumhüllenden verglichen wird.

Aus der WO 97/38292 A1 ist ein Verfahren zum Erfassen und Verarbeiten von akustischen Signalen bekannt, die von sich hin- und her bewegenden, oszillierenden oder rotierenden Objekten ausgesendet werden, um Änderungen des Zustands der Objekte aufzuzeichnen und vorherzusagen, umfassend das Erfassen und Aufzeichnen verschiedener Arten von Signalen, die von den Objekten ausgesendet werden und unterschiedliche Amplitude, Wellenlänge oder Frequenz haben, eine mathematische Verarbeitung der aufgezeichneten Signale, und eine weitere Verarbeitung des Ergebnisses der mathematischen Verarbeitung mittels einer multivariaten Kalibrierung, um Informationen über den Zustand der Objekte zu erhalten.

Aus der DE 20 2015 001 082 U1 ist eine Spindelvorrichtung für eine programmgesteuerte Werkzeugmaschine bekannt, mit einem Spindelgehäuse, einer in dem Spindelgehäuse um eine Spindelachse drehbar gelagerten Arbeitsspindel mit einer Spannvorrichtung zum Einspannen einer in einem Werkzeugaufnahmeabschnitt der Spindelvorrichtung eingesetzten Werkzeugschnittstelle, die dazu ausgebildet ist, ein Fräs- oder Bohrwerkzeug zu halten, und einer an dem Spindelgehäuse angeordneten Sensorikeinrichtung, die zumindest einen Körperschallsensor aufweist, der dazu eingerichtet ist, bei Schleifbearbeitungen auftretenden Körperschallwellen bzw. -schwingungen zu erfassen.

Aus der DE 11 2010 001 558 B4 ist ein Verfahren zur Schwingungsunterdrückung für eine Werkzeugmaschine bekannt, zur Vermeidung des Ratterns bei der Bearbeitung eines Werkstücks mit einem Bearbeitungswerkzeug, mit den Schritten: Erfassen einer mit dem Anlauf der Rotation des Bearbeitungswerkzeugs oder des Werkstücks auftretenden Schwingung; Bestimmen, ob die seit dem Anlauf der Drehung erfasste Schwingung einen Schwellwert überschritten hat; Analyse der Schwingung durch Fourier-Reihenentwicklung, wenn festgestellt wird, dass die Schwingung den Schwellwert überschritten hat; Anpassen einer Spindeldrehzahl der Werkzeugmaschine unter Berücksichtigung der erfassten Schwingung und der Anzahl von Schneidezähnen des Bearbeitungswerkzeugs; Festlegen einer bei Leerlauf der Spindel auftretenden Eigenschwingung als Schwellwert; und Begrenzen der Analyse durch Fourier-Reihenentwicklung auf lediglich einen Schwingungsfrequenzbereich, bei dem Rattern tatsächlich auftritt.

Es erfolgt demgemäß bei der DE 11 2010 001 558 B4 keine breitbandige Überwachung der Werkzeugmaschine. Dabei geht es vor allem um die Erkennung des Ratterns und nicht um eine breitbandige Überwachung mit Rückschlüssen auf diverse Betriebszustände.

Werkzeugmaschinen, etwa Schleifmaschinen, insbesondere Rundschleifmaschinen, sind im Stand der Technik bekannt. So können beispielsweise Rundschleifmaschinen rotationssymmetrische Werkzeuge, etwa Schleifscheiben, aufweisen. Diese können in geeigneter Weise mit einem Werkstück zur Materialabtragung zusammenwirken. Rundschleifmaschinen können beispielsweise zum Außenrundschleifen, Innenrundschleifen, ferner zum Einstechschleifen bzw. Schrägeinstechschleifen ausgebildet sein. Neben Schleifscheiben können beim Rundschleifen grundsätzlich auch Schleifbänder zur Anwendung kommen. Neben rotationssymmetrischen Werkstückflächen können etwa auch exzentrisch ausgebildete Werkstückflächen bearbeitet werden, wenn die Werkstückaufnahme und eine Werkzeugeinheit, etwa der Spindelkopf, in geeigneter Weise antreibbar und relativ zueinander verfahrbar sind. Auf diese Weise können etwa Nockenwellen, Kurbelwellen oder ähnliche Werkstücke mit exzentrischen Geometrien bearbeitet bzw. geschliffen werden. Ferner sind Werkzeugmaschinen bekannt, die eine kombinierte Bearbeitung von Werkstücken erlauben, etwa kombinierte Schleif- und Drehmaschinen.

Ein zu bearbeitendes Werkstück kann etwa zwischen zwei Spitzen einer Werkstückaufnahme oder aber einseitig in einer Werkstückaufnahme aufgenommen sein. Daneben ist das sogenannte spitzenlose Schleifen bekannt, bei dem das Werkstück in der Schleifmaschine nicht (axial) zwischen Spitzen aufgenommen ist. Vielmehr kann das Werkstück etwa über Auflageschienen, Regelscheiben, Führungsrollen, Lünetten oder dergleichen aufgenommen und geführt werden.

Werkzeugmaschinen, insbesondere Schleifmaschinen, können verschiedene Automatisierungsgrade aufweisen. Beispielhaft sind konventionelle Schleifmaschinen bekannt, bei denen ein Werkzeugwechsel, Werkstückwechsel sowie eine Steuerung des Bearbeitungsvorgangs im Wesentlichen manuell durch einen Bediener/Werker durchgeführt wird. Daneben sind grundsätzlich Schleifmaschinen bekannt, die automatisiert mit Werkstücken beladen werden können. In gleicher Weise können bearbeitete (etwa geschliffene) Werkstücke entladen werden. Mit geeigneten Handhabungsvorrichtungen kann somit ein im Wesentlichen autonomer Betrieb ermöglicht werden, ohne dass manuelle Bedienereingriffe erforderlich sind. Derartige Werkzeugmaschinen oder Fertigungssysteme eignen sich insbesondere für die Großserienfertigung. Die Werkzeugmaschinen sind regelmäßig als Einzweckmaschinen ausgestaltet und insbesondere dahingehend optimiert, ein Verhältnis aus Hauptzeiten (Zeiten der eigentlichen Bearbeitung) und Nebenzeiten (etwa Zeiten für den Wechsel der Werkstücke) zu maximieren.

Werkzeugmaschinen, insbesondere Schleifmaschinen, können verschiedene Betriebsmodi aufweisen. Beispielhaft kann in einem automatisierten (produktiven) Betriebsmodus eine zuvor programmierte Bearbeitungsaufgabe im Wesentlichen vollautomatisch abgearbeitet werden. Regelmäßig ist bei derartigen Betriebsmodi kein manueller Eingriff durch einen Bediener erforderlich. Zustellbewegungen, Vorschubbewegungen und weitere erforderliche Positionierungen des Werkzeugs können dank zuvor hinterlegter Bearbeitungspfade durch die Werkzeugmaschine selbstständig vollzogen werden.

Es sind jedoch auch Betriebsmodi bekannt, bei denen eine zumindest teilweise manuelle Steuerung von Komponenten der Werkzeugmaschine, insbesondere des Spindelkopfes mit dem aufgenommenen Werkzeug, erforderlich ist. Hierzu gehören insbesondere Rüstvorgänge und Einrichtvorgänge. Ebenso ist es vorstellbar, den Spindelkopf der Werkzeugmaschine bei der Durchführung manueller Messoperationen durch einen Bediener (oder Einrichter) steuern zu lassen. Das Einrichten kann etwa erforderlich werden, wenn das Werkzeug (beispielsweise die Schleifscheibe) gewechselt oder zumindest abgerichtet wird. Hierzu kann es etwa erforderlich sein, definierte Referenzpunkte der Werkzeugmaschine, die beispielsweise am Maschinentisch oder Maschinenbrett vorgegeben sind, anzufahren. Hierfür besteht häufig die Möglichkeit, den Spindelkopf zunächst mittels einer Grobbewegung (Schnellgang) nahe an den Referenzpunkt heranzuführen und anschließend mittels einer Feinbewegung (Kriechgang) den Referenzpunkt anzutasten, um das Anfahren abzuschließen.

Es ist zudem bekannt, an derartigen Werkzeugmaschinen Beschleunigungs- oder Körperschallsensoren anzuordnen und mit Hilfe der Beschleunigungs- bzw. Körperschallsignale Rückschlüsse auf einen Ist-Zustand der Werkzeugmaschine zu erhalten. Mögliche Ist-Zustände sind dabei: ein Betrieb der Werkzeugmaschine ohne ein Werkstück zu bearbeiten, insbesondere zu schleifen, wobei das Werkzeug, insbesondere die Schleifscheibe, bereits rotiert aber kein Materialabtrag stattfindet; ein Schleifen der Schleifscheibe am Werkstück, wobei ein Materialabtrag stattfindet; diverse Zwischenzustände, also beispielsweise ein Schleifen der Schleifscheibe an dem Werkstück ohne im Wesentlichen Material abzutragen, oder ein Kontaktieren der Schleifscheibe von Schmierfluid oder Kühlmittel, wobei die Schleifscheibe nicht an dem Werkstück schleift.

Unter Körperschall sind vorliegend vorzugsweise Schwingungen der Werkzeugmaschine zu verstehen, die beim Betrieb der Werkzeugmaschine entstehen. Hiervon umfasst sind auch Beschleunigungswerte der Werkzeugmaschine. Es versteht sich, dass auch Schall im klassischen Sinne, also durch die Atmosphäre übertragene Schwingungen, von dem Begriff Körperschall umfasst sein kann.

Es ist bekannt, Körperschallsignale der Werkzeugmaschine in einem vordefinierten Frequenzband auszuwerten. Hierbei wird beim Einrichten der Werkzeugmaschine ein Frequenzband ohne störende Nebengeräusche und mit charakteristischen Betriebsfrequenzen der Werkzeugmaschine von einem Maschineneinrichter gewählt, wobei in diesem Band dann die Auswertung der Körperschallsignale stattfinden soll.

Es ist ferner bekannt, die entsprechenden Körperschallsignale in einer Frequenzdarstellung auszuwerten, wobei ein Überschreiten eines vordefinierten Schwellwerts auf eine Fehlfunktion, beispielsweise zu schnelles Zustellen oder die Verwendung eines fehlerhaften oder falschen Werkzeugs, hindeuten kann.

Unter Frequenzdarstellung ist vorliegend zu verstehen, dass die Leistung und/oder die Amplitude der Körperschallsignale in Abhängigkeit von der Frequenz ermittelt wird.

Zum Einrichten einer derartigen Überwachung einer Werkzeugmaschine, insbesondere einer Schleifmaschine, ist daher geschultes und erfahrenes Fachpersonal notwendig, insbesondere für die Auswahl eines geeigneten Frequenzbandes.

Vor diesem Hintergrund liegt der vorliegenden Erfindung die Aufgabe zugrunde, eine verbesserte Werkzeugmaschine, insbesondere eine verbesserte Schleifmaschine, sowie ein verbessertes Verfahren zur Ermittlung eines Ist-Zustandes einer Werkzeugmaschine, insbesondere einer Schleifmaschine, anzugeben.

Diese Aufgabe wird erfindungsgemäß gelöst durch eine Werkzeugmaschine, insbesondere Schleifmaschine, mit einer Messeinrichtung, die an der Werkzeugmaschine aufgenommen ist, wobei die Messeinrichtung zumindest einen Körperschallsensor aufweist, und mit einer Steuereinrichtung, die mit der Messeinrichtung und der Werkzeugeinheit koppelbar ist, wobei die Steuereinrichtung dazu ausgebildet ist, durch die zumindest eine Körperschallmesseinrichtung von der Werkzeugmaschine ausgelöste Körperschallsignale zu erfassen, einen Ist-Zustand der Werkzeugmaschine durch Bilden eines Differenzspektrums aus einem breitbandigen Referenzspektrum und einem breitbandigen Ist-Spektrum zu ermitteln, und die Leistung des Differenzspektrums in ihrem zeitlichen Verlauf auszuwerten, wobei die Leistung des Differenzspektrums einer Fläche unter einer Kurve des Differenzspektrums entspricht.

Die obige Aufgabe wird ferner durch ein Verfahren zur Ermittlung eines Ist-Zustands einer Werkzeugmaschine, insbesondere einer Schleifmaschine gelöst, wobei das Verfahren die folgenden Schritte aufweist: Bereitstellen einer Messeinrichtung, wobei die Messeinrichtung zumindest eine Körperschallmesseinrichtung, vorzugsweise einen Piezoschallsensor, aufweist; Erfassen von Körperschallsignalen der Werkzeugmaschine; und Ermitteln eines Ist-Zustandes mittels der Körperschallsignale, wobei ein Differenzspektrum aus einem breitbandigen Referenzspektrum und einem breitbandigen Ist-Spektrum gebildet wird, wobei der Ist-Zustand der Werkzeugmaschine aus dem Differenzspektrum ermittelt wird, und wobei die Leistung des Differenzspektrums in ihrem zeitlichen Verlauf ausgewertet wird, wobei die Leistung des Differenzspektrums einer Fläche unter einer Kurve des Differenzspektrums entspricht.

Die Aufgabe ist somit vollkommen gelöst.

Erfindungsgemäß kann durch die Verwendung von breitbandigen Spektren das Einrichten durch geschultes Fachpersonal möglichst vermieden werden. Zumindest kann der Aufwand hierfür reduziert werden. Mit anderen Worten kann die Werkzeugmaschine, insbesondere die Schleifmaschine, beim ersten Hochfahren/Einschalten bereits eingerichtet sein, so dass die Werkzeugmaschine selbstständig den Ist-Zustand zuverlässig ermitteln kann.

Durch das Verwenden von breitbandigen Spektren kann insbesondere das Nutzsignal im Verhältnis zum Hintergrundrauschen größer sein, so dass eine genauere und schnellere Detektion der verschiedenen Ist-Zustände möglich sein kann.

Dieser Ansatz ermöglicht eine schnellere Signalverarbeitung, wobei der gesamte erfassbare Frequenzbereich ausgewertet werden kann.

Bevorzugt weist hierbei die Messeinrichtung Piezobeschleunigungs- bzw. Piezoschallsensoren auf. Es versteht sich, dass auch andere geeignete Sensortypen Verwendung finden können. Es ist auch vorstellbar, verschiedene Sensortypen miteinander zu kombinieren.

Es ist auch vorstellbar, Schallwandler in Form von Mikrofonen zu verwenden. Derartige Sensoren benötigen nicht unbedingt eine feste Verbindung mit denjenigen Teilen der Werkezugmaschine, bei denen Schwingungen auftreten. Die Verwendung von Mikrophonen als Körperschallsensor kann Kostenvorteile und Funktionsvorteile mit sich bringen. Beispielsweise ist es möglich, die Körperschallsensoren etwas abseits von der unmittelbaren Bearbeitungszone anzuordnen. Dies verringert die Belastung der Körperschallsensoren enorm (mechanische Belastung, Belastung durch Kühlschmiermittel, Belastung durch Temperaturschwankungen, Späne, Abrieb, etc.).

Es ist vorstellbar, eine Mehrzahl von Mikrofonen bei der Werkezugmaschine verteilt anzuordnen, um über eine Richtungscharakteristik Positionsbestimmungen oder Bereichsbestimmungen, bezogen auf Schallquellen bzw. Schwingungsquellen, zu erlauben. Etwas Derartiges ist in Grenzen auch mit nur einem Mikrofon umsetzbar.

Breitbandig in Bezug auf die Spektren ist vorliegend so zu verstehen, dass vorzugsweise der gesamte erfassbare Frequenzbereich, insbesondere ohne Einschränkung auf bevorzugte Frequenzbänder, verwendbar bzw. erfassbar ist. Dies erlaubt eine Signalverarbeitung und -auswertung, ohne dass zuvor (schmalbandige) Frequenzbänder manuell oder in sonstiger Weise rechentechnisch ausgewählt werden müssen.

Dies kann Ausführungsbeispiele umfassen, bei einen ein bestimmter (breiter) Abschnitt des theoretisch erfassbaren Frequenzbandes des Körperschallsensors oder der Körperschallsensoren der weiteren Signalverarbeitung und insbesondere der Transformation der erfassten Signale in den Frequenzbereich zugrunde gelegt wird. Beispielsweise kann dies Ausführungsbeispiele umfassen, bei denen breite Bänder genutzt werden, die mindestens 50%, vorzugsweise mindestens 75%, weiter bevorzugt mindestens 90% der vom Sensor erfassbaren Frequenzen umfassen (Prozent-Angaben bezogen auf Achsenbereiche - in absoluten oder relativen Längeneinheiten - bei einer logarithmischen Darstellung des Frequenzbandes bzw. Frequenzgangs des Körperschallsensors).

Beispielsweise kann das breite Band, welches der weiteren Verarbeitung zugrunde gelegt wird, einen Bereich von einstelligen oder zweistelligen Hz (Hertz) bis hin zu zweistelligen KHz (Kilohertz) umfassen. Generell können die Bereiche Infraschall, Schall und Ultraschall zumindest teilweise abgedeckt werden. Dies ist jedoch nicht einschränkend zu verstehen.

Idealerweise muss gar keine Vorauswahl betreffend das zu verarbeitende Frequenzband getroffen werden. Demgemäß können die vom Körperschallsensor erfassten Signale gänzlich und unabhängig von ihrer Frequenz verarbeitet werden.

Die Steuereinrichtung ist dazu ausgebildet, die Leistung des Differenzspektrums in ihrem zeitlichen Verlauf auszuwerten, also für jedes Ist-Spektrum die Differenz aus einem Ist-Spektrum und dem Referenzspektrum zu bilden und die in dem Differenzspektrum enthaltene Leistung zu ermitteln, so dass sich ein zeitlicher Verlauf der Leistung des Differenzspektrums, also des zusätzlichen Körperschalls, ergibt.

Dieser zeitliche Verlauf gleicht vorzugsweise einem Puls, wobei einem Zeitpunkt eine Amplitude zuordnet wird. Es können bekannte Auswertungskriterien und Verfahren zu Bestimmung der Pulsparameter verwendet werden. Die Auswertung des Ist-Zustandes ist vereinfacht, so dass die Auswertung der zeitabhängigen Amplitude bzw. Pulshöhe ausreichen kann, um den Ist-Zustand der Werkzeugmaschine zuverlässig zu ermitteln.

In einer weiteren beispielhaften Ausführungsform ist die Steuereinrichtung dazu ausgebildet, das breitbandige Referenzspektrum und/oder das breitbandige Ist-Spektrum durch Transformation der Körperschallsignale in den Frequenzbereich zu ermitteln, vorzugsweise durch eine Fourier Transformation, insbesondere durch eine Fast Fourier Transformation.

Die Körperschallsignale können in ihrer gesamten Bandbreite erfasst und ausgewertet werden, wobei insbesondere ein hohes Signal-zu-Rausch-Verhältnis der aufsummierten Leistung des Differenzspektrums erhalten wird.

Die gesamte Bandbreite des zur Verfügung stehenden Signals kann zur Auswertung verwendet werden und nicht nur schmale Frequenzbänder. Dadurch kann das Nutzsignal im Verhältnis zum Rauschen deutlich erhöht sein, was die Auswertung feinfühliger und besser machen kann.

Es versteht sich, dass auch andere bekannte Transformationen in den Frequenzbereich verwendet werden können, ohne den Rahmen der vorliegenden Erfindung zu verlassen, wie beispielsweise eine Gabor-Transformation, Wavelet-Transformationen, eine Gabor-Wigner-Transformation oder eine Laplace-Transformation.

Die Fast Fourier Transformation FFT (deutsch: schnelle Fourier-Transformation) ist ein als solches bekannter Algorithmus zur effizienten Berechnung einer diskreten Fourier-Transformation, also einer Messreihe mit diskreten Werten. Mit ihr kann ein Signal in seine Frequenzanteile zerlegt werden.

Die FFT gehört zu den sogenannten Teile-und-herrsche-Verfahren, wobei zuvor berechnete Zwischenergebnisse wiederverwendet und dadurch arithmetische Rechenoperationen vereinfacht werden können.

In einer weiteren beispielhaften Ausführungsform ist die Steuereinrichtung dazu ausgebildet, als Referenzspektrum eine Transformation der Körperschallsignale in einem Zustand, in dem die Werkzeugmaschine in Betrieb ist, aber das Werkstück noch nicht bearbeitet, aufzuzeichnen und in einer Speichereinheit abzuspeichern. Hierdurch kann das Differenzspektrum einfach und schnell ermittelt werden. Zudem kann die Werkzeugmaschine selbst das Referenzspektrum bestimmen. Insbesondere kann sich die Werkzeugmaschine hierdurch automatisiert einrichten bzw. justieren. Ein Justieren durch geschultes und erfahrenes Fachpersonal ist somit nicht mehr notwendig.

Des Weiteren kann bei der erneuten Aufnahme eines Referenzspektrums das neue Referenzspektrum mit dem in der Speichereinheit gespeicherten Referenzspektrum verglichen werden. Hierdurch können Veränderungen der Werkzeugmaschine wie Verschleiß oder Lagerschäden festgestellt werden.

In einer weiteren beispielhaften Ausführungsform ist die Steuereinrichtung dazu ausgebildet, vor jedem Bearbeiten eines Werkstücks ein neues Referenzspektrum zu ermitteln. Hierdurch kann die Werkzeugmaschine äußerst sensibel auf kurzzeitige Änderungen reagieren, bspw. auf ein erhöhtes Hintergrundrauschen, weil zum Beispiel eine benachbarte Maschine in Betrieb genommen wurde. Insbesondere kann sich die Werkzeugmaschine dadurch bei jedem Werkstückwechsel, aber auch bei jedem Werkzeugwechsel, selbst neu justieren. Folglich können insbesondere die Standzeiten relativ klein gehalten werden, da eine Justierung von Hand entfällt. Demzufolge kann eine vergleichsweise hoher Teiledurchsatz, insbesondere unabhängig von der Häufigkeit eines Werkzeugwechsels, erreicht werden.

Gemäß einer weiteren beispielhaften Ausführungsform weist die Werkzeugmaschine eine Ausgabeeinheit, beispielsweise einen Bildschirm, einen Statusindikator, z.B. nach Art einer Ampel, einen Lautsprecher oder einen Drucker auf, die dazu ausgebildet ist, von der Steuereinrichtung eine aus dem zeitlichen Verlauf der Leistung des Differenzspektrums abgeleitete Größe zu empfangen und auszugeben. Hierdurch ist eine einfache In-Prozesskontrolle durch einen, insbesondere ungelernten, Werker/Bediener möglich. Ein Betreiben der Werkzeugmaschine außerhalb des zulässigen Bereichs kann einfach identifiziert und bei Bedarf zudem dokumentiert werden.

Ein Statusindikator nach Art einer Ampel ist dabei vorzugsweise eine Leuchteinrichtung mit Leuchtmitteln, die verschiedene Farben aufweisen, beispielsweise rot, grün und gelb. Je nach Höhe der zusätzlichen Körperschallsignale des Ist-Spektrums in Bezug auf das Referenzspektrum, kann der Ist-Zustand der Werkzeugmaschine durch die Leuchtmittel angezeigt werden. Beispielsweise können Schwellwerte für den zeitlichen Verlauf der Leistung des Differenzspektrums, also für die Amplitude des oben beschriebenen Pulses, definiert werden, so dass unterhalb eines ersten Schwellwertes die Ampel grün leuchtet, zwischen einem ersten und zweiten Schwellwert gelb und über dem zweiten Schellwert rot. Ein rotes Aufleuchten der Ampel kann anzeigen, dass der zusätzliche Körperschall größer als vorgesehen ist, was bedeuten kann, dass die Werkzeugmaschine außerhalb des zulässigen Bereichs betrieben wird.

Zusätzliche Körperschallsignale sind vorliegend als die im Differenzspektrum enthaltene Überschussleistung zu verstehen. Es handelt sich dabei beispielsweise um den Körperschall der durch die Bearbeitung mittels der Werkzeugmaschine entsteht.

Gemäß einer weiteren beispielhaften Ausführungsform ist die Steuereinrichtung dazu ausgebildet, die Werkzeugeinheit auf Basis der Körperschallsignale zu steuern, vorzugsweise die Zustellgeschwindigkeit und weitere Prozessparameter der Werkzeugeinheit, insbesondere die Rotationsgeschwindigkeit. Hierdurch ist es möglich, ein automatisches Abschalten der Werkzeugmaschine zu realisieren, um Beschädigungen der Werkzeugmaschine, und/oder des Werkstücks, und/oder möglichen Gefährdungen eines Bedieners/Werkers zuverlässig, effizient und schnell entgegenzuwirken.

Des Weiteren kann hierdurch eine selbstlernende Werkzeugmaschine realisiert werden, wobei das Steuergerät der Werkzeugmaschine auf Basis der Körperschallsignale selbst die Zustellgeschwindigkeit und weitere Prozessparameter regelt. Auf diese Weise kann ein, insbesondere in Bezug auf die Bearbeitungsgeschwindigkeit, optimierter Prozessablauf erreicht werden.

Vorzugsweise kann auf verschiedene Werkstück- und Werkzeugqualitäten während der Bearbeitung reagiert werden, so dass gegebenenfalls entsprechende Toleranzen aufgeweitet werden können.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1: eine perspektivische Ansicht einer als Schleifmaschine ausgebildeten Werkzeugmaschine mit einer Einhausung;
- Fig. 2a: eine perspektivische Draufsicht einer Werkzeugmaschine;
- Fig. 2b: eine schematische Blockdarstellung von Komponenten der Messeinrichtung;
- Fig. 3a: ein Beispiel für ein breitbandiges Referenzspektrum;
- Fig. 3b: ein Beispiel für ein breitbandiges Ist-Spektrum
- Fig. 3c: ein Beispiel für ein breitbandiges Differenzspektrum, das aus einer Differenz eines Ist-Spektrums und eines Referenzspektrums gebildet wird;
- Fig. 4: eine schematische Darstellung eines Leistungspeaks beispielsweise in einem Differenzspektrum oder einem Referenzspektrum;
- Fig. 5: schematisch und beispielhaft den zeitlichen Verlauf der Leistungen im Differenzspektrum; und
- Fig. 6: ein schematisches, vereinfachtes Flussdiagramm eines beispielhaften Verfahrens zur Ermittlung eines Ist-Zustands einer Werkzeugmaschine.

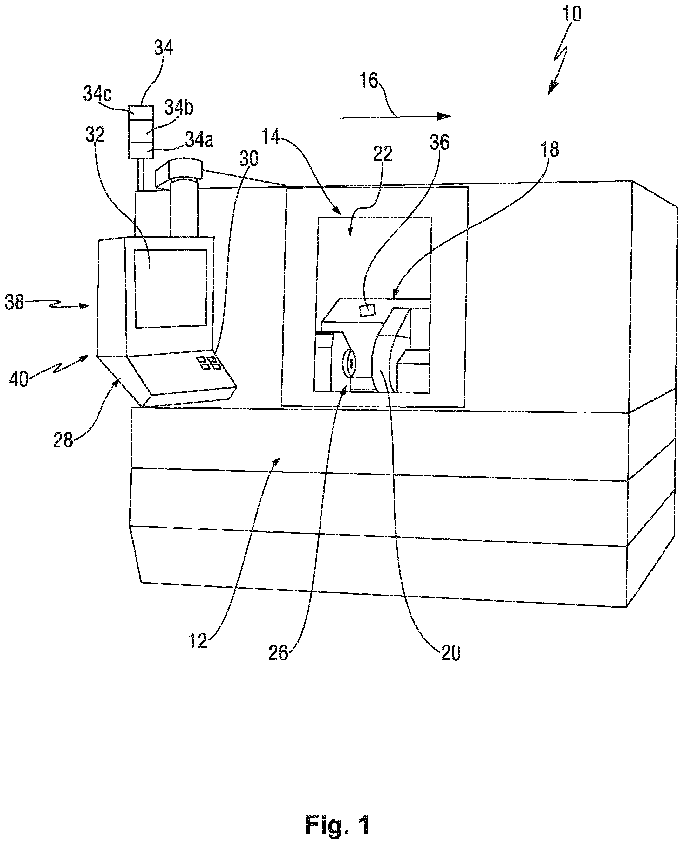

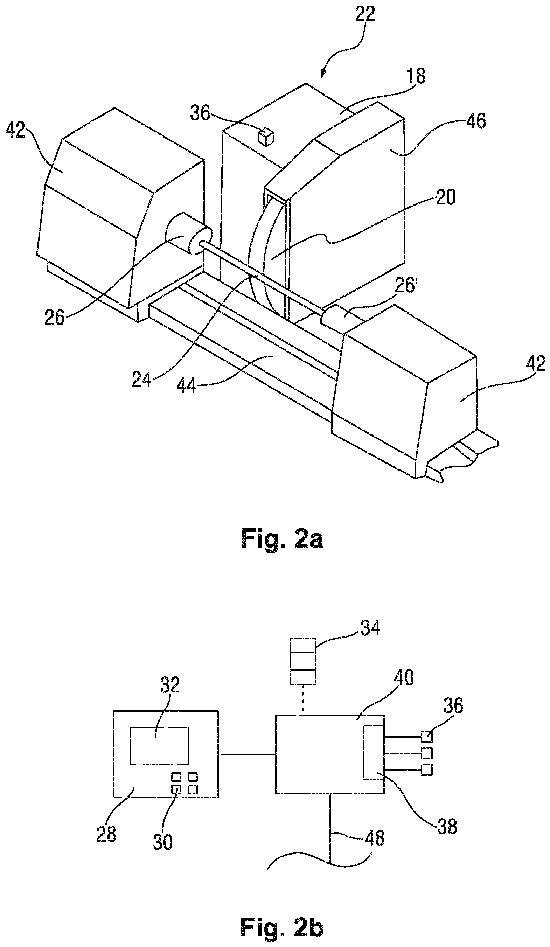

In Fig. 1 ist eine Werkzeugmaschine perspektivisch dargestellt und insgesamt mit 10 bezeichnet. Fig. 2 zeigt eine korrespondierende Draufsicht etwa der Werkzeugmaschine 10 gemäß Fig. 1, wobei aus Veranschaulichungsgründen verschiedene Komponenten nicht dargestellt sind.

Die Werkzeugmaschine 10 ist vorliegend als Schleifmaschine ausgebildet, insbesondere als Rundschleifmaschine, allgemein auch als Horizontalschleifmaschine. Die Werkzeugmaschine 10 weist eine Einhausung 12 auf, die als Gehäuse fungiert. Die Einhausung 12 kann auch mit einem Sichtfenster 14 versehen sein. Die Einhausung 12 definiert dabei einen Prozessraum, der vorzugsweise nach außen abgeschlossen ist oder abschließbar ist. Die Einhausung 12 erlaubt insbesondere bei automatisierten Bearbeitungsvorgängen eine sichere Abgrenzung des Prozessraums der Werkzeugmaschine 10. Auf diese Weise kann grundsätzlich die von beweglichen Komponenten ausgehende Gefahr minimiert werden. Ferner kann ein unerwünschter Austritt von Schmiermittel, Kühlflüssigkeit, Spänen oder beispielsweise Funken in die Umgebung unterbunden werden. Die Einhausung 12 kann in geeigneter Weise mit Türen oder Klappen versehen sein, um den Prozessraum der Werkzeugmaschine 10 zugänglich zu machen.

Bei besonderen Betriebsmodi kann es erforderlich sein, das Sichtfenster 14 als eine Art Schutztür auszubilden, um den Innenraum der Werkzeugmaschine durch einen Bediener von außen erreichbar zu machen. Zu diesem Zweck kann das Sichtfenster 14 beispielhaft seitlich verschoben bzw. verschwenkt werden, um eine zuvor verschlossene Öffnung freizugeben. Ein mit 16 bezeichneter Pfeil veranschaulicht eine mögliche Öffnungsbewegung der Schutztür.

Betriebsmodi, die einen Zugang in den Innenraum der Werkzeugmaschine 10 erforderlich machen, können beispielsweise Rüstvorgänge, Einrichtvorgänge, Abrichtvorgänge oder allgemein Werkzeugwechsel- bzw. Werkstückwechselvorgänge sein. Es versteht sich, dass abhängig von dem Automatisierungsgrad der Werkzeugmaschine 10 verschiedene Betriebsmodi einen manuellen Zugang in den Innenraum der Werkezugmaschine 10 erforderlich machen können.

In Fig. 1 ist ferner im Innenraum der Werkzeugmaschine 10 eine Werkzeugeinheit 22 mit einem Spindelkopf 18 angedeutet. Am Spindelkopf 18 ist ein Werkzeug 20 aufgenommen. Bei diesem Werkzeug 20 kann es sich insbesondere um ein Schleifwerkzeug, vorzugsweise eine Schleifscheibe handeln.

Die Werkzeugmaschine 10 weist zudem eine Werkstückaufnahme 26 auf, die zur Aufnahme eines Werkstücks 24 ausgebildet ist. Aus Gründen der Übersicht ist in Fig. 1 kein Werkstück 24 dargestellt. Der Spindelkopf 18 kann zur Bearbeitung eines Werkstücks relativ zur Werkstückaufnahme 26 axial verfahren werden.

Werkzeugmaschinen 10, insbesondere Schleifmaschinen, weisen üblicherweise eine Werker- oder Bedienerschnittstelle 28 auf, die außerhalb des Innenraums der Werkzeugmaschine 10 angeordnet ist. Folglich kann ein Bediener die Werkzeugmaschine 10 steuern, programmieren, regeln oder beispielsweise Diagnosen durchführen, ohne mit dem Innenraum der Werkzeugmaschine 10 in Kontakt zu kommen. Bei der Bedienerschnittstelle 28 handelt es sich vorzugsweise um eine Bedieneinheit, die zumindest eine Eingabevorrichtung 30 zur Eingabe von Steuerbefehlen aufweist. Die Bedienerschnittstelle 28 kann zudem eine Ausgabeeinheit 32, beispielsweise einen Bildschirm aufweisen. Ferner ist es denkbar, einen sogenannten Touchscreen zu verwenden, also eine kombinierte Eingabe- und Ausgabeeinheit.

Ferner kann ein Statusindikator 34 vorgesehen sein, der beispielsweise rote Leuchtmittel 34a, orange oder gelbe Leuchtmittel 34b und grüne Leuchtmittel 34c aufweist, um den Ist-Zustand der Maschine darzustellen. Mit anderen Worten kann der Statusindikator 34 etwa ähnlich einer Ampel gestaltet sein. Andere Gestaltungen des Statusindikators 34 sind ohne weiteres denkbar.

In Fig. 1 ist ferner ein Sensor 36, insbesondere ein Piezobeschleunigungs- oder Körperschallsensor schematisch dargestellt. Dieser Sensor 36 ist vorzugsweise in der Nähe des Werkzeugs 20 angeordnet und per Funk oder per Kabel mit einer nicht näher dargestellten Messeinrichtung 38 verbunden. Die Messeeinrichtung 38 kann vorzugsweise in Steuereinrichtung 40 integriert sein, wobei die Steuereinrichtung 40 vorzugsweise in die Bedienerschnittstelle 28 integriert sein kann.

Alternativ oder zusätzlich können Sensoren 36 vorgesehen sein, die als Mikrofone oder Schallwandler gestaltet sind und ein breitbandiges Frequenzspektrum abdecken, etwa im Bereich des hörbaren Schalls (20 Hz bis 20 KHz) oder sogar darüber hinaus auch im Bereich des Infraschalls und/oder des Ultraschalls. Derartig gestaltete Sensoren 36 können auch vom Werkzeug 20 oder sonstigen bewegten Komponenten der Werkzeugmaschine 10 beabstandet angeordnet sein.

Selbstverständlich ist es auch denkbar, mehrere dieser Sensoren 36 an der Werkzeugmaschine 10 anzuordnen, insbesondere in der Nähe des zu bearbeitenden Werkstücks 24.

Fig. 2a zeigt eine vereinfachte perspektivische Draufsicht einer Werkzeugmaschine 10, die grundsätzlich der Werkzeugmaschine 10 gemäß Fig. 1 entsprechen oder zumindest ähnlich sein kann. Aus Gründen der Übersichtlichkeit weist die in Fig. 2a dargestellte Ausgestaltung keine Einhausung 12 sowie keine Bedienerschnittstelle 28 oder Ampel 34 auf.

In Fig. 2a ist vereinfacht die Werkstückaufnahme 26 dargestellt. Diese ist an einem Werkstückträger 42 angeordnet, der entlang einer Führung 44 axial verfahren werden kann. Zudem ist es denkbar, an einem dem Werkstückträger 42 gegenüberliegenden axialen Ende der Führung 44 einen weiteren Werkstückträger bzw. Reitstock 42' mit einem weiteren Werkstückhalter 26' vorzusehen, um so das Werkstück 24 zur Bearbeitung mit dem Werkzeug 20 zwischen den beiden Werkstückhaltern 26 und 26' zu fixieren.

Das Werkzeug 20 weist im vorliegenden Fall eine Werkzeugumhausung 46 auf, diese Werkzeugumhausung 46 ist an dem Spindelkopf 18 angeordnet und umgibt zumindest teilweise das Werkzeug 20. Am Spindelkopf 18 ist schematisch ein Beschleunigungs- oder Körperschallsensor 36 dargestellt. Ein entsprechender Körperschallsensor 36 kann auch, insbesondere zusätzlich, am Werkstückträger 42 oder am Werkstückträger 42' angeordnet sein.

In Fig. 2b sind schematisch elektrische Verbindungen und/oder Funkverbindungen der Messeinrichtung 38 mit einem oder mehreren Körperschallsensoren 36 dargestellt. Außerdem sind Verbindungen der Steuereinrichtung 40 mit der in Fig. 2a nicht dargestellten Bedienerschnittstelle 28 gezeigt sowie beispielhaft gestrichelt eine Verbindung zu dem Statusindikator in Form einer Ampel 34.

In Fig. 2b ist weiter eine Verbindung 48 zur (übergeordneten) Steuerung der Werkzeugmaschine 10 gezeigt.

Zur Bearbeitung eines Werkstücks 24 wird zunächst das Werkstück in den Werkstückhalter 26 eingeführt und fixiert, vorzugsweise geklemmt, so dass das Werkstück 24 von dem Werkstückhalter 26 gehalten wird. Das Werkzeug 20 und der Spindelkopf 18 sind bewegbar ausgestaltet, so dass das Werkzeug 20 zu dem Werkstück 24 verfahren werden kann, um es zu bearbeiten. Besonders bevorzugt ist hierbei, wenn das Werkzeug 20 insbesondere der komplette Spindelkopf 18 um mehr als eine Raumrichtung bewegbar ausgebildet ist, um eine weitreichende Bearbeitung des Werkstücks 24 zu gewährleisten.

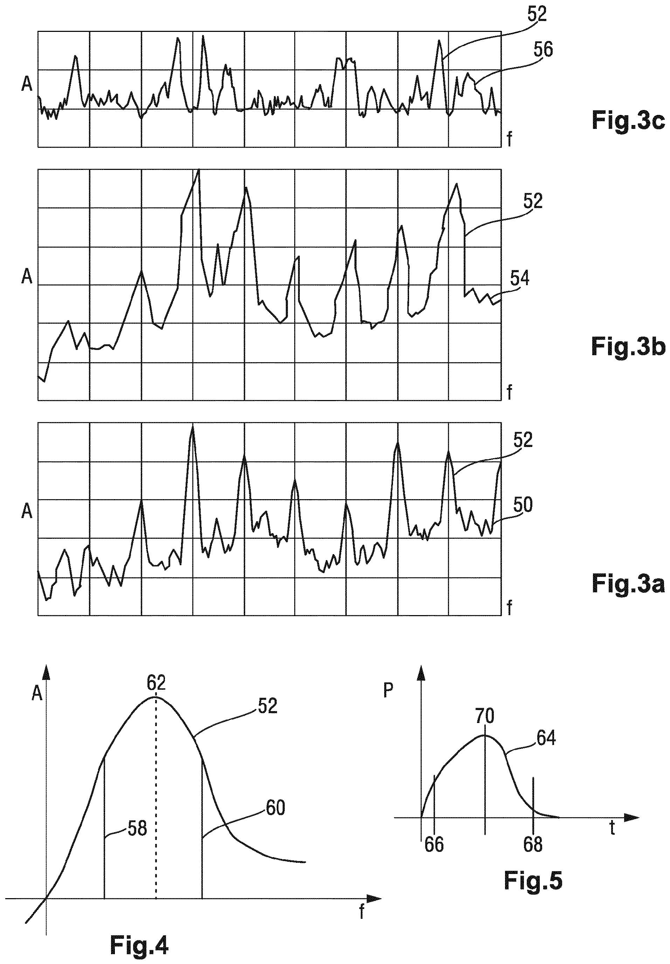

In einem Zustand, in dem das Werkzeug 20 bereits rotiert, aber das Werkstück 24 noch nicht bearbeitet wird, kann die Steuereinrichtung 40 veranlassen, ein Referenzspektrum 50 (oder Hintergrundspektrum) aufzunehmen. Hierbei liest die Steuereinrichtung 40 direkt oder indirekt, also über die Messeinrichtung 38, die Signale des zumindest einen Körperschallsensors 36 aus und transformiert die in Zeitserie aufgenommenen Signale in eine Frequenzdarstellung. Hierfür stehen eine Vielzahl von Algorithmen zur Verfügung, wobei vorliegend vorzugsweise der Fast Fourier Transform Algorithmus (FFT) Verwendung findet. Ein derartiges Referenzspektrum 50 ist in Fig. 3a schematisch dargestellt.

Als Zeitserie wird vorliegend die Schwingungsamplitude der Werkzeugmaschine 10, also der Körperschall, verstanden.

Als Frequenzraum wird eine Darstellung verstanden, bei der die Amplituden der Schwingungen der Werkzeugmaschine 10, also der Körperschall, bezüglich ihrer Frequenzanteile erfasst/berechnet/dargestellt werden. Der Frequenzraum gibt Aufschluss darüber, mit welcher Amplitude bei welcher Frequenz die Werkzeugmaschine 10 schwingt.

Wenn das Werkstück 24 von dem Werkzeug 20 bearbeitet, vorzugsweise geschliffen oder poliert, wird, verändern sich die von den Körperschallsensoren 36 erfassbaren Signale, also der Körperschall der Werkzeugmaschine 10. Die Steuereinrichtung 40 kann hierbei ein sogenanntes Ist-Spektrum 54 aufzeichnen, also die Signale der Körperschallsensoren 36 auslesen und in den Frequenzraum transformieren. Von dem so erhaltenen Ist-Spektrum 54 kann dann das Referenzspektrum 50 abgezogen werden, um ein Differenzspektrum 56 zu erhalten. Ein entsprechendes Ist-spektrum 54 ist bespielhalft in Fig. 3b gezeigt. Ein entsprechendes Differenzspektrum 56 ist beispielhaft in Fig. 3c gezeigt.

Üblicherweise weisen derartige Spektren verschiedene sogenannte Peaks 52 auf. Diese Peaks 52 zeigen, wie viel Leistung des Körperschalls in einer bestimmten Frequenz vorhanden ist. Die Peaks 52 entstehen vor allem dadurch, dass eine periodische Bewegung, wie beispielhaft die Rotation des Werkzeugs 20, auftritt. Die Peaks 52 zeigen dominante bzw. charakteristische Köperschallfrequenzen, die beim Betrieb der Werkezugmaschine 10 auftreten können. Üblicherweise sind diese Peaks 52 nicht "scharf", sondern weisen eine gewisse Unschärfe, also Breite, im Frequenzraum auf. Das hängt insbesondere damit zusammen, dass die Körperschallsignale teilweise gedämpft werden und insbesondere eine gewisse Dispersion der Körperschallsignale in der Werkzeugmaschine 10 bei der Propagation des Körperschalls von der Quelle des Körperschalls zu einem Körperschallsensor 36 stattfindet.

Es versteht sich, dass das Referenzspektrum 50 in einer Speichereinheit der Steuereinrichtung 40 abgelegt werden kann, um eine schnelle Berechnung des Differenzspektrums 56 zu ermöglichen.

Bevorzugt werden während des Betriebs der Werkzeugmaschine 10 kontinuierlich Ist-Spektren 54 ermittelt und von dem Referenzspektrum 50 abgezogen, um entsprechende Differenzspektren 56 zu erhalten.

Die in den Differenzspektren 56 enthaltene Leistung, also die Fläche unter der Kurve eines Differenzspektrums 56, wird aufsummiert.

Hierbei kann die in einem Peak 52 enthaltene Leistung, wie in Fig. 4 schematisch durch einen ideal verlaufenden Peak 52 dargestellt, wie folgt bestimmt werden: Der Flächeninhalt einer Fläche, die von den Linien 58 und 60 und dem Peak 52 definiert wird, kann in an sich bekannter Weise berechnet werden. Die Linien 58 und 60 sind dabei symmetrisch um ein Peak-Maximum 62 angeordnet. Anschließend werden alle derart erhaltenen Flächen aufsummiert.

Es versteht sich, dass dieses Verfahren nur beispielhaft erwähnt ist. Es ist auch denkbar, jeden einzelnen diskreten Wert des Differenzspektrums 56 aufzusummieren, in der Art einer numerischen Integration. Ein Wert des Differenzspektrums wird mit der entsprechenden Intervallbreite, man spricht hierbei auch von der Auflösung des Spektrums, multipliziert, um eine Teilfläche unter dem Spektrum zu bestimmen. Anschließend werden die so erhaltenen Teilflächen addiert, um die im Spektrum enthaltene Fläche und damit die Leistung zu ermitteln.

Die in den Differenzspektren 56 enthaltene Leistung kann dann, wie in Fig. 5 schematisch dargestellt, über der Zeit aufgetragen werden. In Fig. 5 verläuft in dem Differenzspektrum 56 enthaltene Leistung entlang der Ordinate, wobei entlang der Abszisse die Zeit aufgetragen ist. Auf diese Weise kann eine Art Puls 64 ermittelt werden, wobei dieser Puls 64 Aufschluss darüber gibt, wie hoch die Leistung des breitbandigen Körperschallsignals im Verhältnis zum Hintergrundrauschen, also dem Referenzspektrum 50 ist.

Das heißt mit anderen Worten, je geringer die Amplitude des Pulses 64, desto weniger zusätzlicher Körperschall der Werkzeugmaschine 10 wurde erfasst. In einem Zustand in dem ein Werkstück 24 noch nicht von der Werkzeugmaschine 10 bearbeitet wird, ist vorzugsweise kein zusätzlicher Körperschall vorhanden. Das bedeutet, dass der Puls 64 eine vergleichsweise geringe Amplitude, vorzugsweise nahe 0, aufweist. Ein derartiger Zustand ist beispielsweise durch die Bezugsziffern 66 und 68 bei dem Puls 64 in Fig. 5 gezeigt.

Mit der Intensität der Bearbeitung eines Werkstücks 24, nimmt auch der zusätzliche Körperschall zu. Hierdurch steigt die in den Differenzspektren 56 enthaltene Leistung und schlussendlich die Amplitude des Pulses 64. Ein derartiger Zustand ist etwa durch die Bezugsziffer 70 bei dem Puls 64 in der Fig. 5 gezeigt.

Durch Auswertung dieses Pulses 64 kann der Ist-Zustand der Werkzeugmaschine 10 einfach ermittelt werden. Hierbei können beispielsweise Schwellwerte für den erhaltenen Puls 64 definiert werden, wobei bei Überschreiten eines entsprechenden Schwellwerts beispielsweise ein Alarmsignal an einen Bediener ausgegeben werden kann.

Ferner ist es möglich, die Werkzeugmaschine 10 automatisiert abzuschalten bei Überschreiten eines Schwellwerts, um so Beschädigungen des Werkstücks 24, der Werkzeugmaschine 10, oder gar etwaige Gefährdungen eines Bedieners zu verhindern.

Zudem ist es möglich, die Zustell- oder Bearbeitungsgeschwindigkeit der Werkzeugmaschine 10 zu regeln, so dass die Bearbeitung eines Werkstücks 24 entsprechend der enthaltenen Leistung im Differenzspektrum 56, also entsprechend dem zusätzlichen Körperschall, und schlussendlich in Abhängigkeit von dem Puls 64 gesteuert wird.

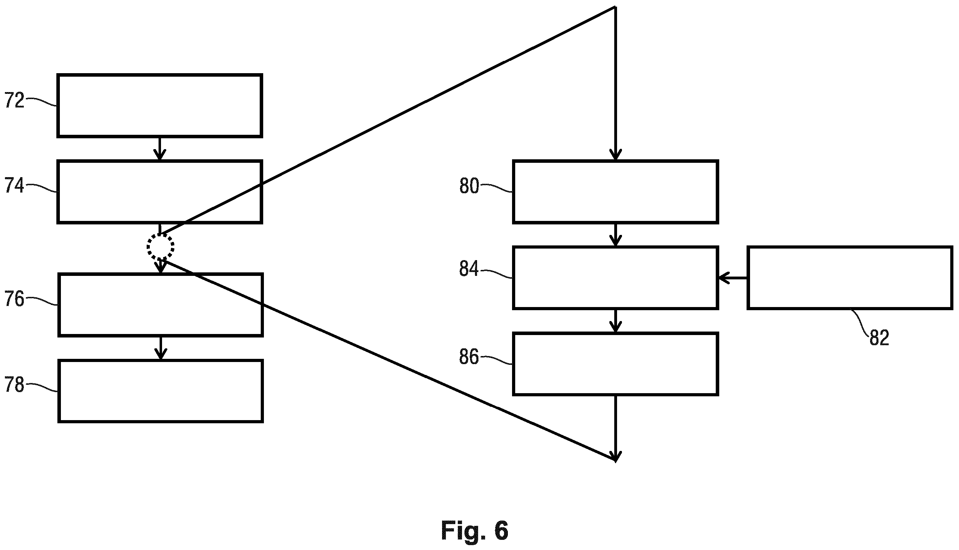

Fig. 6 veranschaulicht in stark vereinfachter Weise anhand eines schematischen Flussdiagramms ein beispielhaftes Verfahren zur Ermittlung eines Ist-Zustands einer Werkzeugmaschine 10. Hierbei wird in einem ersten Schritt 72 eine Messeinrichtung 38 bereitgestellt, die zumindest einen Körperschallsensor 36, vorzugsweise einen Piezoschallsensor 36 aufweist. In einem darauffolgenden Schritt 74 werden die Körperschallsignale der Werkzeugmaschine 10 erfasst, wobei in einem darauffolgenden Schritt 76 der Ist-Zustand der Werkzeugmaschine 10 mittels der erfassten Körperschallsignale ermittelt wird. Ein Differenzspektrum 56 wird aus einem breitbandigen Referenzspektrum 50 und einem breitbandigen Ist-Spektrum 54 gebildet, wobei der Ist-Zustand der Werkzeugmaschine 10 aus dem Differenzspektrum 56 ermittelt wird. In einem darauffolgenden Schritt 78 kann dann der Ist-Zustand der Werkzeugmaschine 10 ausgegeben werden.

Zwischen dem Erfassen der Körperschallsignale der Werkzeugmaschine 10 in Schritt 74 und dem Ermitteln des Ist-Zustands der Werkzeugmaschine 10 in Schritt 76 wird vorzugsweise die Leistung eines Differenzspektrums 56 ausgewertet. Hierauf soll im Folgenden genauer eingegangen werden.

In einem Schritt 80 wird ein Referenzspektrum 50 anhand der erfassten Körperschallsignale erstellt, wobei hier vorzugsweise die Körperschallsignale erfasst werden, während die Werkzeugmaschine 10 in Betrieb ist, aber das Werkstück 24 noch nicht bearbeitet wird. In einem weiteren Schritt 82 wird ein Ist-Spektrum 54 anhand erfasster Köperschallsignale ermittelt, wobei die Körperschallsignale aufgezeichnet werden, während die Werkzeugmaschine 10 das Werkstück 24 bearbeitet. Die Körperschallsignale werden bei der Ermittlung der Spektren, also des Ist-Spektrums 54 und des Referenzspektrums 50, vorzugsweise mittels FFT, in den Frequenzraum transformiert.

In einem anschließenden Schritt 84 wird das Referenzspektrum 50 von dem Ist-Spektrum 54 abgezogen und dadurch ein Differenzspektrum 56 ermittelt sowie die in dem Differenzspektrum 56 enthaltene Leistung aufsummiert. In einem sich daran anschließenden Schritt 86 wird die in dem Differenzspektrum 56 enthaltene Leistung als Amplitude über der Zeit dargestellt/ausgewertet. Anhand dieser Amplitude kann dann in dem Schritt 76 der Ist-Zustand der Werkzeugmaschine 10 ermittelt werden.

Der Körperschall der Werkzeugmaschine 10 wird vorzugsweise kontinuierlich oder quasi-kontinuierlich erfasst, wobei von den dadurch erhaltenen Ist-Spektren 54 fortwährend das Referenzspektrum 50 abgezogen wird, um zu jedem Zeitpunkt ein Differenzspektrum 56, insbesondere die Leistung in dem Differenzspektrum 56, und somit den zusätzlichen Körperschall, zu ermitteln. Der so erhaltene Verlauf der Leistung in den Differenzspektren 56 über der Zeit gleicht einem Puls 64.

Zu jedem Zeitpunkt kann der Ist-Zustand der Werkzeugmaschine 10 ermittelt werden. Im Allgemeinen ist es also möglich, den Ist-Zustand der Werkzeugmaschine 10 unmittelbar bzw. nur mit geringer Verzögerung zu ermitteln, so dass Fehlfunktionen frühzeitig erkannt und Beschädigungen der Werkzeugmaschine 10 zuverlässig verhindert werden können.

Auf diese Weise können ferner Vorhersagen möglich sein. Beispielsweise kann durch Bestimmung der momentanen Steigung des Pulses 64 der weitere Verlauf abgeschätzt werden. So ist möglich, noch bevor die Werkzeugmaschine 10 außerhalb des zulässigen Bereichs betrieben wird, entsprechend zu reagieren.

Zudem ist es denkbar, eine selbstregelnde Werkzeugmaschine 10 zu schaffen, da aufgrund der Kenntnis des Ist-Zustands Regelgrößen, wie Drehgeschwindigkeit des Werkzeugs 20 oder Zustellgeschwindigkeit des Werkstücks 24, so geregelt werden können, dass die erhaltenen Körperschallsignale, insbesondere die Amplitude des erhaltene Pulses 64 möglichst innerhalb des zulässigen Bereichs bleibt. Hierdurch kann die selbstregelnde Werkzeugmaschine 10 schneller und präziser gesteuert werden als eine Werkzeugmaschine 10, die von einem Bediener eingerichtet wird.

## Patentansprüche

1. Werkzeugmaschine (10), insbesondere Schleifmaschine, die Folgendes aufweist
- eine Messeinrichtung (38), die an der Werkzeugmaschine (10) aufgenommen ist, wobei die Messeinrichtung (38) zumindest einen Körperschallsensor (36) aufweist, und
- eine Steuereinrichtung (40), die mit der Messeinrichtung (38) und einer Werkzeugeinheit (22) koppelbar ist, wobei die Steuereinrichtung (40) dazu ausgebildet ist, von der Werkzeugmaschine (10) ausgelöste Körperschallsignale mittels der Messeinrichtung (38) zu erfassen,
**dadurch gekennzeichnet, dass** die Steuereinrichtung (40) weiter dazu ausgebildet ist, eine einen Ist-Zustand der Werkzeugmaschine (10) beschreibende Zustandsgröße durch Bilden eines Differenzspektrums (56) aus einem breitbandigen Referenzspektrum (50) und einem breitbandigen Ist-Spektrum (54) zu ermitteln, und die Leistung des Differenzspektrums (56) in ihrem zeitlichen Verlauf auszuwerten,
wobei die Leistung des Differenzspektrums (56) einer Fläche unter einer Kurve des Differenzspektrums (56) entspricht.

2. Werkzeugmaschine (10) nach Anspruch 1, **dadurch gekennzeichnet, dass** die Steuereinrichtung (40) dazu ausgebildet ist, das breitbandige Referenzspektrum (50) und/oder das breitbandige Ist-Spektrum (54) durch Transformation der Körperschallsignale in den Frequenzbereich zu ermitteln.

3. Werkzeugmaschine (10) nach Anspruch 2, **dadurch gekennzeichnet, dass** die Steuereinrichtung (40) dazu ausgebildet ist, das breitbandige Referenzspektrum (50) und/oder das breitbandige Ist-Spektrum (54) durch eine Fourier Transformation der Körperschallsignale in den Frequenzbereich zu ermitteln, insbesondere durch eine Fast Fourier Transformation der Körperschallsignale in den Frequenzbereich.

4. Werkzeugmaschine (10) nach einem der Ansprüche 1 bis 3, **dadurch gekennzeichnet, dass** die Steuereinrichtung (40) dazu ausgebildet ist, als Referenzspektrum (50) eine Transformation der Körperschallsignale in einem Zustand, in dem die Werkzeugmaschine (10) in Betrieb ist, aber ein Werkstück (24) noch nicht bearbeitet wird, aufzuzeichnen.

5. Werkzeugmaschine (10) nach einem der Ansprüche 1 bis 4, **dadurch gekennzeichnet, dass** die Steuereinrichtung (40) dazu ausgebildet ist, vor jedem Bearbeiten eines Werkstücks (24) ein neues Referenzspektrum (50) zu ermitteln.

6. Werkzeugmaschine (10) nach einem der Ansprüche 1 bis 5, **dadurch gekennzeichnet, dass** die Werkzeugmaschine (10) eine Ausgabeeinheit (32; 34) aufweist, die dazu ausgebildet ist, den zeitlichen Verlauf der Leistung des Differenzspektrums (56) von der Steuereinrichtung (40) zu empfangen und auszugeben.

7. Werkzeugmaschine (10) nach einem der Ansprüche 1 bis 6, **dadurch gekennzeichnet, dass** die Werkzeugmaschine (10) eine Werkzeugeinheit (22) mit einer Werkzeugspindel (18), insbesondere mit einem Spindelkopf, zur Aufnahme und zum Antrieb eines Werkzeugs (20), insbesondere zumindest einer Schleifscheibe, aufweist, und wobei die Steuereinrichtung (40) dazu ausgebildet ist, die Werkzeugeinheit (22) auf Basis der Körperschallsignale zu steuern.

8. Verfahren zur Ermittlung eines Ist-Zustandes einer Werkzeugmaschine (10), insbesondere einer Schleifmaschine, mit den folgenden Schritten:
- Bereitstellen (72) einer Messeinrichtung (38), wobei die Messeinrichtung (38) zumindest einen Körperschallsensor (36), vorzugsweise einen Piezoschallsensor oder ein Mikrofon, aufweist,
- Erfassen (74) von Körperschallsignalen der Werkzeugmaschine (10), und
- Ermitteln (76) eines Ist-Zustands der Werkzeugmaschine (10) auf Basis der Körperschallsignale,
**dadurch gekennzeichnet, dass** ein Differenzspektrum (56) aus einem breitbandigen Referenzspektrum (50) und einem breitbandigen Ist-Spektrum (54) gebildet wird, dass der Ist-Zustand der Werkzeugmaschine (10) aus dem Differenzspektrum (56) ermittelt wird, und
dass die Leistung des Differenzspektrums (56) in ihrem zeitlichen Verlauf ausgewertet wird,
wobei die Leistung des Differenzspektrums (56) einer Fläche unter einer Kurve des Differenzspektrums (56) entspricht.

9. Verfahren nach Anspruch 8, **dadurch gekennzeichnet, dass** das breitbandige Referenzspektrum (50) und/oder das breitbandige Ist-Spektrum (54) durch Transformation der Körperschallsignale in den Frequenzbereich ermittelt wird.

10. Verfahren nach Anspruch 9, **dadurch gekennzeichnet, dass** das breitbandige Referenzspektrum (50) und/oder das breitbandige Ist-Spektrum (54) durch eine Fourier Transformation der Körperschallsignale in den Frequenzbereich ermittelt wird, insbesondere durch eine Fast Fourier Transformation der Körperschallsignale in den Frequenzbereich.

11. Verfahren nach einem der Ansprüche 8 bis 10, **dadurch gekennzeichnet, dass** das Referenzspektrum (50) in einem Zustand, in dem die Werkzeugmaschine (10) in Betrieb ist, aber ein Werkstück (24) noch nicht bearbeitet wird, ermittelt wird.

12. Verfahren nach einem der Ansprüche 8 bis 11, **dadurch gekennzeichnet, dass** bei der erneuten Aufnahme eines Referenzspektrums (50) das neue Referenzspektrum mit dem gespeicherten Referenzspektrum verglichen wird, um Veränderungen des Zustands der Werkzeugmaschine (10) festzustellen.

13. Verfahren nach einem der Ansprüche 8 bis 12, **dadurch gekennzeichnet, dass** der zeitliche Verlauf der Leistung des Differenzspektrums (56) auf einer Ausgabeeinheit ausgegeben (32; 34) wird.

14. Verfahren nach einem der Ansprüche 8 bis 13, **dadurch gekennzeichnet, dass** vor jedem Bearbeiten eines Werkstücks (24) ein neues Referenzspektrum (50) aufgezeichnet wird.

## Claims

1. A machine tool (10), in particular a grinding machine, comprising the following:
- a measuring device (38), which is arranged on the machine tool (10), wherein the measuring device (38) comprises at least one structure-borne sound sensor (36), and
- a control device (40), which can be coupled to the measuring device (38) and to a tool unit (22), wherein the control device (40) is configured to acquire, by means of the measuring device (38), structure-borne sound signals caused by the machine tool (10),
**characterized in that** the control device (40) is further configured to determine a state variable, which describes an actual state of the machine tool (10), by forming a differential spectrum (56) from a broadband reference spectrum (50) and a broadband actual spectrum (54), and to evaluate the power of the differential spectrum (56) in its time behavior,
wherein the power of the differential spectrum (56) corresponds to the area under a curve of the differential spectrum (56).

2. The machine tool (10) as claimed in claim 1, **characterized in that** the control device (40) is configured to determine the broadband reference spectrum (50) and/or the broadband actual spectrum (54) by a transformation of the structure-borne sound signals into the frequency domain.

3. The machine tool (10) as claimed in claim 2, **characterized in that** the control device (40) is configured to determine the broadband reference spectrum (50) and/or the broadband actual spectrum (54) by a Fourier transformation of the structure-borne sound signals into the frequency domain, in particular by a fast Fourier transformation of the structure-borne sound signals into the frequency domain.

4. The machine tool (10) as claimed in any one of claims 1 to 3, **characterized in that** the control device (40) is configured to record, as a reference spectrum (50), a transformation of the structure-borne sound signals in a state in which the machine tool (10) is in operation, but a workpiece (24) is not yet being machined.

5. The machine tool (10) as claimed in any one of claims 1 to 4, **characterized in that** the control device (40) is configured to determine a new reference spectrum (50) before each machining of a workpiece (24).

6. The machine tool (10) as claimed in any one of claims 1 to 5, **characterized in that** the machine tool (10) comprises an output unit (32; 34), which is configured to receive from the control device (40) and to output the time behavior of the power of the differential spectrum (56).

7. The machine tool (10) as claimed in any one of claims 1 to 6, **characterized in that** the machine tool (10) comprises a tool unit (22) having a tool spindle (18), in particular having a spindle head, for supporting and driving a tool (20), in particular at least one grinding disk, and wherein the control device (40) is configured to control the tool unit (22) on the basis of the structure-borne sound signals.

8. A method for determining an actual state of a machine tool (10), in particular a grinding machine, comprising the following steps:
- providing (72) a measuring device (38), wherein the measuring device (38) comprises at least one structure-borne sound sensor (36), preferably a piezoelectric sound sensor or a microphone,
- acquiring (74) structure-borne sound signals of the machine tool (10), and
- determining (76) an actual state of the machine tool (10) on the basis of the structure-borne sound signals,
**characterized in that** a differential spectrum (56) is formed from a broadband reference spectrum (50) and a broadband actual spectrum (54), **in that** the actual state of the machine tool (10) is determined on the basis of the differential spectrum (56), and
**in that** the power of the differential spectrum (56) is evaluated in its time behavior,
wherein the power of the differential spectrum (56) corresponds to the area under a curve of the differential spectrum (56).

9. The method as claimed in claim 8, **characterized in that** the broadband reference spectrum (50) and/or the broadband actual spectrum (54) is determined by a transformation of the structure-borne sound signals into the frequency domain.

10. The method as claimed in claim 9, **characterized in that** the broadband reference spectrum (50) and/or the broadband actual spectrum (54) is determined by a Fourier transformation of the structure-borne sound signals into the frequency domain, in particular by a fast Fourier transformation of the structure-borne sound signals into the frequency domain.

11. The method as claimed in any one of claims 8 to 10, **characterized in that** the reference spectrum (50) is determined in a state in which the machine tool (10) is in operation, but a workpiece (24) is not yet being machined.

12. The method as claimed in any one of claims 8 to 11, **characterized in that**, upon the renewed recording of a reference spectrum (50), the new reference spectrum is compared with the stored reference spectrum, in order to detect changes in the state of the machine tool (10).

13. The method as claimed in any one of claims 8 to 12, **characterized in that** the time behavior of the power of the differential spectrum (56) is output at an output unit (32; 34).

14. The method as claimed in any one of claims 8 to 13, **characterized in that** a new reference spectrum (50) is recorded before each machining of a workpiece (24).

## Revendications

1. Machine-outil (10), en particulier meuleuse, présentant les éléments suivants
- un dispositif de mesure (38) qui est reçu sur la machine-outil (10), dans laquelle le dispositif de mesure (38) présente au moins un capteur de bruits de structure (36), et
- un dispositif de commande (40) qui peut être couplé au dispositif de mesure (38) et à une unité d'outil (22), dans laquelle le dispositif de commande (40) est configuré pour détecter des signaux de bruits de structure déclenchés par la machine-outil (10) au moyen du dispositif de mesure (38),
**caractérisée en ce que** le dispositif de commande (40) est en outre configuré pour déterminer une grandeur d'état décrivant un état réel de la machine-outil (10) en formant un spectre différentiel (56) à partir d'un spectre de référence à large bande (50) et d'un spectre réel à large bande (54), et pour évaluer la puissance du spectre différentiel (56) dans son évolution temporelle,
dans laquelle la puissance du spectre différentiel (56) correspond à une aire sous une courbe du spectre différentiel (56).

2. Machine-outil (10) selon la revendication 1, **caractérisée en ce que** le dispositif de commande (40) est configuré pour déterminer le spectre de référence à large bande (50) et/ou le spectre réel à large bande (54) par transformation des signaux de bruits de structure dans le domaine fréquentiel.

3. Machine-outil (10) selon la revendication 2, **caractérisée en ce que** le dispositif de commande (40) est configuré pour déterminer le spectre de référence à large bande (50) et/ou le spectre réel à large bande (54) au moyen d'une transformée de Fourier des signaux de bruits de structure dans le domaine fréquentiel, en particulier au moyen d'une transformée de Fourier rapide des signaux de bruits de structure dans le domaine fréquentiel.

4. Machine-outil (10) selon l'une des revendications 1 à 3, **caractérisée en ce que** le dispositif de commande (40) est configuré pour enregistrer, en tant que spectre de référence (50), une transformation des signaux de bruits de structure dans un état dans lequel la machine-outil (10) est en fonctionnement, mais une pièce (24) n'est pas encore usinée.

5. Machine-outil (10) selon l'une des revendications 1 à 4, **caractérisée en ce que** le dispositif de commande (40) est configuré pour déterminer un nouveau spectre de référence (50) avant chaque usinage d'une pièce (24).

6. Machine-outil (10) selon l'une des revendications 1 à 5, **caractérisée en ce que** la machine-outil (10) présente une unité de sortie (32 ; 34) qui est configurée pour recevoir en provenance du dispositif de commande (40) l'évolution temporelle de la puissance du spectre différentiel (56) et pour la délivrer en sortie.

7. Machine-outil (10) selon l'une des revendications 1 à 6, **caractérisée en ce que** la machine-outil (10) présente une unité d'outil (22) comportant une broche d'outil (18), en particulier comportant une tête de broche, pour la réception et l'entraînement d'un outil (20), en particulier d'au moins une meule, et dans laquelle le dispositif de commande (40) est configuré pour commander l'unité d'outil (22) sur la base des signaux de bruits de structure.

8. Procédé permettant la détermination d'un état réel d'une machine-outil (10), en particulier d'une meuleuse, comportant les étapes suivantes :
- fourniture (72) d'un dispositif de mesure (38), dans lequel le dispositif de mesure (38) présente au moins un capteur de bruits de structure (36), de préférence un capteur de bruits piézoélectrique ou un microphone,
- détection (74) de signaux de bruits de structure de la machine-outil (10), et
- détermination (76) d'un état réel de la machine-outil (10) sur la base des signaux de bruits de structure,
**caractérisé en ce qu'**un spectre différentiel (56) est formé à partir d'un spectre de référence à large bande (50) et d'un spectre réel à large bande (54), que l'état réel de la machine-outil (10) est déterminé à partir du spectre différentiel (56), et
que la puissance du spectre différentiel (56) est évaluée dans son évolution temporelle,
dans lequel la puissance du spectre différentiel (56) correspond à une aire sous une courbe du spectre différentiel (56).

9. Procédé selon la revendication 8, **caractérisé en ce que** le spectre de référence à large bande (50) et/ou le spectre réel à large bande (54) sont déterminés par transformation des signaux de bruits de structure dans le domaine fréquentiel.

10. Procédé selon la revendication 9, **caractérisé en ce que** le spectre de référence à large bande (50) et/ou le spectre réel à large bande (54) sont déterminés au moyen d'une transformée de Fourier des signaux de bruits de structure dans le domaine fréquentiel, en particulier au moyen d'une transformée de Fourier rapide des signaux de bruits de structure dans le domaine fréquentiel.

11. Procédé selon l'une des revendications 8 à 10, **caractérisé en ce que** le spectre de référence (50) est déterminé dans un état dans lequel la machine-outil (10) est en fonctionnement, mais une pièce (24) n'est pas encore usinée.

12. Procédé selon l'une des revendications 8 à 11, **caractérisé en ce que**, lors du nouvel enregistrement d'un spectre de référence (50), le nouveau spectre de référence est comparé avec le spectre de référence mémorisé afin d'identifier des modifications de l'état de la machine-outil (10).

13. Procédé selon l'une des revendications 8 à 12, **caractérisé en ce que** l'évolution temporelle de la puissance du spectre différentiel (56) est délivrée en sortie (32 ; 34) sur une unité de sortie.

14. Procédé selon l'une des revendications 8 à 13, **caractérisé en ce qu'**un nouveau spectre de référence (50) est enregistré avant chaque usinage d'une pièce (24).
